# EUROPEAN PATENT APPLICATION

(11) **EP 4 006 819 A1**
(43) Date of publication of application: **01.06.2022**
(21) Application number: 20760746.6
(22) Date of filing: 21.07.2020
(51) Int. Cl.: G06Q 50/26, G06Q 50/28, G06Q 30/06, H04N 7/18, G02B 27/00, B08B 3/02, G06N 3/08, G06K 9/62, G06Q 20/14

(54) **GARBAGE DISPOSAL SERVICE DEVICE AND DRIVING METHOD FOR DEVICE**

(30) Priority: 30.07.2019 KR 20190092151; 14.07.2020 KR 20200086692
(71) Applicant: Kim, Wu Il, Seoul 08776 (KR)
(72) Inventor: Kim, Wu Il, Seoul 08776 (KR)
(74) Representative: Cabinet Chaillot
(86) International application number: PCT/KR2020/009567
(87) International publication number: WO 2021/020790

(57) **Abstract**

The present invention relates to a garbage disposal service apparatus and a method of operating the same. The garbage disposal service apparatus according to an embodiment of the present invention includes a communication interface unit configured to receive garbage collection request information according to a garbage collection service requested from a user terminal device and a control unit configured to determine, when the garbage collection request information is received, whether each household violates garbage disposal regulations on the basis of discard state information of garbage, which is collected in a face-to-face manner by a worker of a collection company visiting each household on the basis of the received collection request information, transmit a determination result to an external device of a garbage supervisory agency, and calculate a garbage disposal charge in conjunction with the external device on the basis of code information printed on a garbage bag and the discard state information.

## Description

### [Technical Field]

The present invention relates to a garbage disposal service apparatus and a method of operating the same, and more particularly, to a garbage disposal service apparatus promoting a clean garbage disposal environment by allowing a user to directly transfer garbage to a collection worker in a face-to-face manner without putting the garbage out at a separate place when the user requests garbage collection through a smart phone or the like and a method of operating the apparatus.

### [Background Art]

Generally, in a volume-rate garbage disposal system, a garbage disposal cost is differentially charged depending on the amount of discarded garbage and thus, when the amount of discarded garbage is increased, the disposal cost is increased accordingly. Korea's Ministry of Environment switched from the previous system in which a garbage disposal cost is charged according to a tax base, such as a building area and a property tax, to the volume-rate garbage disposal system in which a cost is charged using the actual amount of discarded garbage as a tax base according to the "polluter pays" principle and has implemented the volume-rate garbage disposal system nationwide since Jan 1, 1995. Currently, garbage corresponding to the volume-rate garbage disposal system is general garbage which is generated from general households and small businesses. People should put general garbage in a standard bag and discard the standard bag, and standard bags are on sale for residents at determined prices from designated stores. Since the prices of standard bags include a garbage disposal cost, it is unnecessary to separately pay a collection charge for garbage which is put in a standard bag and discarded. Prices of standard bags vary depending on districts and capacities. When a person is found discarding garbage without putting it in a standard bag, he or she is fined one million won. Currently, recyclable materials are collected without charge, and thus the cost may be reduced by separating recyclable materials in advance and separately discarding them. Different types of recyclable materials are collected depending on the day of the week, or all types of recyclable materials are collected on different days of the week depending on the district.

In this regard, a garbage bag logistics switching system for producing, distributing, selling, and disposing of garbage bags on which a barcode is printed was disclosed according to a conventional art. To remotely manage selling and collecting garbage bags, large waste objects (e.g. stickers), and food garbage bags (stickers), through the Internet or a computational network, the garbage bag logistics switching system includes a main server which includes recognition information, order information, warehousing information, inventory movement information, sale information, and collection information so that garbage bags can be recognized for efficient management and collection of garbage, an auxiliary server which recognizes the sales and the amount of discarded garbage bags, large waste objects (stickers), and food garbage bags (stickers) through barcodes attached to garbage bags, large waste objects (stickers), and food garbage bags (stickers) and examines and analyzes the amount of garbage discarded in each district, a management server which may estimate sales and a stock of garbage bags, large waste objects (stickers), and food garbage bags (stickers) by predicting monthly discarded amounts for some years, and a transmission means which checks the barcode of discarded garbage to determine whether the checked data is circulated normally.

However, when garbage is collected according to the conventional art, residents should bring garbage in person to a collection place designated near their houses. This is troublesome and may cause foul odors. Also, garbage may fall during the transportation process, and animals may tear up garbage bags carried to the collection place so that the surroundings may become dirty.

In addition, general garbage, food garbage, recyclable waste, etc. discarded by residents are separately collected in a collection place near houses. When the collected garbage and waste are collected by garbage trucks, the residential environment becomes dirty. This is unsanitary and causes acrid foul odors. Also, it is not possible to detect a resident who does not separately discard garbage.

### [Disclosure]

### [Technical Problem]

Embodiments of the present invention are directed to providing a garbage disposal service apparatus promoting a clean garbage disposal environment by allowing a user to directly transfer garbage to a collection worker in a face-to-face manner without putting the garbage out at a separate place when the user requests garbage collection through a smart phone or the like and a method of operating the apparatus.

### [Technical Solution]

One aspect of the present invention provides a garbage disposal service apparatus including a communication interface unit configured to receive garbage collection request information according to a garbage collection service requested from a user terminal device and a control unit configured to determine, when the garbage collection request information is received, whether each household violates garbage disposal regulations on the basis of discard state information of garbage, which is collected in a face-to-face manner by a worker of a collection company visiting each household on the basis of the received collection request information, transmit a determination result to an external device of a garbage supervisory agency, and calculate a garbage disposal charge in conjunction with the external device on the basis of code information printed on a garbage bag and the discard state information.

For example, the government and the company agree with each other to split profits at a ratio of 3 to 7. Then, when the company delivers garbage for 1000 won, the government gets 300 won, and the company gets 700 won. Also, when the company delivers a garbage bag for 2000 won, the government gets 600 won, and the company gets 1400 won. Under this agreement, the amounts of money are simply and clearly calculated by a computer because the entire garbage disposal process is computerized. The government just monitors the process and thus gets a small share.

The control unit may analyze zone-specific, date-specific, or time-specific current garbage discard states on the basis of the code information of the garbage bag and the discard state information and transmit analysis results to the external device.

When a plurality of collection companies are present in the same jurisdiction, the control unit may designate at least one collection company on the basis of collection information and response results of the collection companies and order the designated collection company to collect the garbage.

The control unit may determine a type of the garbage on the basis of the collection information, designate a plurality of collection companies corresponding to a determination result, and order the plurality of collection companies to collect the garbage.

The control unit may monitor the garbage collection company on the basis of first time information corresponding to a time when the garbage collection is requested, second time information corresponding to a time when the garbage is collected from each household, third time information corresponding to a time when the garbage is sorted in a temporary storage, and fourth time information corresponding to a time when the sorted garbage is transported to a landfill or an incineration plant.

The communication interface unit may interoperate with a water jet provided for an imaging apparatus of a temporary storage in which the garbage is temporarily stored, and when a captured video of the imaging apparatus is abnormal, the control unit may operate the water jet provided for the imaging apparatus to clean a lens of the imaging apparatus.

The communication interface unit may interoperate with an infrared sensor installed in a temporary storage in which the garbage is temporarily stored to detect hazmat garbage on a conveyor belt, and the control unit may analyze a sensing signal of the infrared sensor on the basis of deep learning of an artificial intelligence to distinguish the hazmat garbage.

Another aspect of the present invention provides a method of operating a garbage disposal service apparatus, the method including receiving, by a communication interface unit, garbage collection request information according to a garbage collection service requested from a user terminal device and, when the garbage collection request information is received, determining, by a control unit, whether each household violates garbage disposal regulations on the basis of discard state information of garbage, which is collected in a face-to-face manner by a worker of a collection company visiting each household on the basis of the received collection request information, transmitting a determination result to an external device of a garbage supervisory agency, and calculating a garbage disposal charge in conjunction with the external device on the basis of code information printed on a garbage bag and the discard state information.

The method may further include analyzing, by the control unit, zone-specific, date-specific, or time-specific current garbage discard states on the basis of the code information of the garbage bag and the discard state information and transmitting analysis results to the external device.

The method may further include, when a plurality of collection companies are present in the same jurisdiction, designating, by the control unit, at least one collection company on the basis of collection information and response results of the collection companies and ordering the designated collection company to collect the garbage.

The ordering of the designated collection company to collect the garbage may include determining a type of the garbage on the basis of the collection information, designating a plurality of collection companies corresponding to a determination result, and ordering the plurality of collection companies to collect the garbage.

The method may further include monitoring, by the control unit, the garbage collection company on the basis of first time information corresponding to a time when the garbage collection is requested, second time information corresponding to a time when the garbage is collected from each household, third time information corresponding to a time when the garbage is sorted in a temporary storage, and fourth time information corresponding to a time when the sorted garbage is transported to a landfill or an incineration plant.

The communication interface unit may interoperate with a water jet provided for an imaging apparatus of a temporary storage in which the garbage is temporarily stored, and the method may further include, when a captured video of the imaging apparatus is abnormal, operating, by the control unit, the water jet provided for the imaging apparatus to clean a lens of the imaging apparatus.

The communication interface unit may interoperate with an infrared sensor installed in a temporary storage in which the garbage is temporarily stored to detect hazmat garbage on a conveyor belt, and the method may further include analyzing, by the control unit, a sensing signal of the infrared sensor on the basis of deep learning of an artificial intelligence to distinguish the hazmat garbage.

Another aspect of the present invention provides a home-visiting garbage bag delivery and disposal system including an agency server configured to generate and manage an identification code printed on a garbage bag, sell the garbage bag on which the identification code is printed to a store at a price including a delivery charge to store sale information therein, and check delivery information transmitted from a delivery company server to pay the delivery charge to the delivery company server, a store terminal installed in a store at which garbage bags are sold to residents and configured to transmit an order for garbage bags to be sold to residents to the agency server so that garbage bags may be purchased, a resident terminal owned by residents and configured to capture a garbage image, request the delivery company server to analyze the captured garbage image, and transmit a delivery request for garbage contained in a garbage bag to the delivery company server together with visit information, the delivery company server configured to analyze the garbage image requested by the resident terminal, transmit a garbage type and a garbage bag suitable for the garbage type to the resident terminal, order a delivery worker to collect the garbage bag through a home visit and deliver the garbage bag to a temporary garbage storage by transmitting the visit information to a delivery worker, receive and store the delivery information including an identification code, which is recognized and transmitted through a delivery worker terminal owned by the delivery worker, calculate the delivery charge, and transmit the delivery charge to the agency server together with the delivery information, and a garbage storage server installed in a temporary garbage storage designated in every residential area and configured to store delivery information including an identification code of a garbage bag delivered by a delivery worker.

The visit information may include a name of the resident, a home address of the resident, a phone number of the resident, and a requested delivery time, and the delivery information may include the name of the resident, the home address of the resident, the phone number of the resident, a name of the delivery company, a name of the delivery worker, and a delivery time.

The temporary garbage storage may be a building including a plurality of above-ground floors and below-ground floors, the above-ground floors may include an office for managing garbage and a community facility, garbage bags stored in the below-ground floors may be sorted by garbage type and stored in storage boxes, and the storage boxes may be kept frozen by a refrigerating machine so that foul odors may be prevented.

The garbage storage server may receive video information in real time through closed-circuit television (CCTV) cameras installed in the below-ground floors and order that a storage box be transported to a garbage disposal site through a transport vehicle when the storage box is determined to be filled on the basis of the received video information so that the storage box may be finally disposed of.

Another aspect of the present invention provides a home-visiting garbage bag delivery and disposal method, the method including making, by a store terminal of a store at which garbage bags are sold to residents, an order for garbage bags to an agency server, selling, by the agency server, garbage bags on which identification codes are printed to the store at a price including a delivery charge according to the order of the store terminal and storing sale information, capturing, by a resident terminal, a garbage image and requesting a delivery company server to analyze the garbage image, transmitting, by the resident terminal, visit information to the delivery company server to request garbage delivery, analyzing, by the delivery company server, the garbage image requested by the resident terminal and transmitting a garbage type and a garbage bag suitable for the garbage type to the resident terminal, ordering, by the delivery company server, a delivery worker to collect garbage contained in a garbage bag through a home visit and deliver the garbage bag to a temporary garbage storage designated in every residential area according to the delivery request of a resident, recognizing, by a delivery worker terminal, an identification code printed on the garbage bag to be delivered and transmitting delivery information including an identification code to the delivery company server, storing, by a garbage storage server, the delivery information including the identification code of the garbage bag delivered to the temporary garbage storage, storing, by the delivery company server, the transmitted delivery information including the identification code, calculating the delivery charge, and transmitting the delivery charge to the agency server together with the delivery information, and checking, by the agency server, the delivery information and then paying the delivery charge to the delivery company server.

The visit information may include a name of the resident, a home address of the resident, a phone number of the resident, and a requested delivery time, and the delivery information may include the name of the resident, the home address of the resident, the phone number of the resident, a name of the delivery company, a name of the delivery worker, and a delivery time.

During the home visit of the delivery worker, the delivery work may collect the bag containing the garbage in an airtight container, and the garbage bag may be transported frozen to the temporary garbage storage due to a refrigerating machine being installed in a vehicle of the delivery worker.

In the garbage bag stored in the temporary garbage storage, recyclable materials may be separately collected by the delivery worker, and when unrecyclable garbage is included in a recyclable garbage bag or a hazmat is included in a general garbage bag, the identification code printed on the garbage bag may be transmitted to the agency server so that the resident may be held responsible for the violation.

The agency server may carry out a survey through resident terminals of residents who use a delivery service from delivery companies, and when residents respond through their resident terminals, the agency server may analyze the received responses and impose a penalty on a delivery company having a low service score.

Another aspect of the present invention provides a home-visiting garbage bag delivery and disposal system including an agency server, a delivery company server, a terminal of a delivery company worker, and a resident terminal. The agency server generates and manages an identification code printed on a garbage bag. The resident terminal is owned by a resident who purchases the garbage bag, on which the identification code is printed at a price including a delivery service charge for delivering the garbage bag from a residence of the resident to a temporary garbage storage, and transmits a pickup delivery request for garbage contained in the garbage bag by the resident to the delivery company server. Here, pickup delivery request information includes all or some of a name of the resident, a residence address of the resident, a phone number of the resident, and a requested pickup delivery time. When the garbage pickup delivery request of the resident terminal is received, the delivery company server stores the pickup delivery request information and orders pickup delivery work by transmitting the pickup delivery request information to the worker terminal. The worker of the delivery company having the worker terminal visits the residence of the resident who makes the pickup delivery request. As soon as the worker takes over the garbage bag containing the garbage, the identification code printed on the garbage bag is recognized by the worker with an identification code reader of the worker terminal. Then, the worker terminal combines the identification code of the garbage bag with the pickup delivery request information of the resident, stores the combination as delivery start information, and transmits the delivery start information to the delivery company server. The delivery company server transmits the delivery start information to the agency server and calculates a delivery service charge from the delivery start information to notify the agency server of the delivery service charge. The agency server stores the delivery start information received from the delivery company server and calculates a delivery service charge from the delivery start information. When the calculated delivery service charge is equal to the delivery service charge received from the delivery company server, the agency server may approve the delivery service charge notified by the delivery company server.

The delivery start information may include the pickup delivery request information, the identification code, a time when the identification code is recognized with the identification code reader of the worker terminal, a name or an identity (ID) of the delivery company, and a name or an ID of the worker of the delivery company.

The home-visiting garbage bag delivery and disposal system may further include a garbage storage server installed in a temporary garbage storage designated in every residential area. When the worker of the delivery company having the garbage bag containing the garbage and taken over from the resident moves to the temporary garbage storage and puts the garbage bag in a storage box, the garbage storage server may be caused to store delivery finish information including the identification code of the garbage bag. The garbage storage server may transmit the delivery finish information to the delivery company server and the agency server, and the agency server may approve the delivery service charge for the garbage bag having the identification code only when the delivery finish information is received.

The delivery finish information including the identification code of the garbage bag may be stored in the garbage storage server by recognizing the identification code of the garbage bag with a reader provided in the temporary garbage storage or the storage box or transmitting the delivery start information stored in the worker terminal to the garbage storage server.

As a delivery finish time, the delivery finish information may include a time when the reader provided in the temporary garbage storage or the storage box recognizes the identification code of the garbage bag or a time when the delivery start information is received from the worker terminal.

The system may further include a store terminal installed in a store at which garbage bags are sold to the resident, and the store terminal may transmit an order for garbage bags to be sold to the resident to the agency server. Then, the agency server may store sale information when the garbage bags on which identification codes are printed are sold to the store.

The garbage storage server may receive video information in real time through an installed CCTV camera and order that garbage bags contained in a storage box be transported to a garbage disposal site through a transport vehicle when the storage box is determined to be filled on the basis of the received video information so that the garbage bags may be finally disposed of.

Another aspect of the present invention provides a home-visiting garbage bag delivery and disposal method including generating and managing, by an agency server, an identification code printed on a garbage bag, transmitting, by a resident who purchases the garbage bag, on which the identification code is printed at a price including a delivery service charge for delivering the garbage bag from a residence of the resident to a temporary garbage storage, a pickup delivery request for garbage contained in the garbage bag to a delivery company server through a resident terminal owned by the resident wherein pickup delivery request information includes all or some of a name of the resident, a residence address of the resident, a phone number of the resident, and a requested pickup delivery time, when the garbage pickup delivery request of the resident terminal is received, storing, by the delivery company server, the pickup delivery request information and transmitting the pickup delivery request information to a worker terminal to order pickup delivery work, visiting, by a worker, the residence of the resident who makes the pickup delivery request, recognizing the identification code printed on the garbage bag with an identification code reader of the worker terminal as soon as the worker takes over the garbage bag containing the garbage, combining, by the worker terminal, the identification code of the garbage bag with the pickup delivery request information of the resident, storing the combination as delivery start information, and transmitting the delivery start information to the delivery company server, transmitting, by the delivery company server, the delivery start information to the agency server and calculating a delivery service charge from the delivery start information to notify the agency server of the delivery service charge, and storing, by the agency server, the delivery start information received from the delivery company server, calculating a delivery service charge from the delivery start information, and approving the delivery service charge notified by the delivery company server when the calculated delivery service charge is equal to the delivery service charge received from the delivery company server.

The delivery start information may include the pickup delivery request information, the identification code, a time when the identification code is recognized with the identification code reader of the worker terminal, a name or an ID of the delivery company, and a name or an ID of the worker of the delivery company.

The home-visiting garbage bag delivery and disposal method may further include, when the worker of the delivery company having the garbage bag containing the garbage and taken over from the resident moves to the temporary garbage storage and puts the garbage bag in a storage box, storing delivery finish information including the identification code of the garbage bag in a garbage storage server installed in a temporary garbage storage, transmitting, by the garbage storage server, the delivery finish information to the delivery company server and the agency server, and approving, by the agency server, the delivery service charge for the garbage bag having the identification code only when the delivery finish information is received.

The delivery finish information including the identification code of the garbage bag may be stored in the garbage storage server by recognizing the identification code of the garbage bag with a reader provided in the temporary garbage storage or the storage box or transmitting the delivery start information stored in the worker terminal to the garbage storage server.

As a delivery finish time, the delivery finish information may include a time when the reader provided in the temporary garbage storage or the storage box recognizes the identification code of the garbage bag or a time when the delivery start information is received from the worker terminal.

The home-visiting garbage bag delivery and disposal method may further include transmitting, by the store terminal, an order for garbage bags to be sold to the resident to the agency server and storing, by the agency server, sale information when the garbage bags on which identification codes are printed are sold to the store.

In the garbage bag stored in the temporary garbage storage, recyclable materials may be separately collected by the delivery worker, and when unrecyclable garbage is included in a recyclable garbage bag or hazmat garbage is included in a general garbage bag, the identification code printed on the garbage bag may be transmitted to the agency server so that the resident may be held responsible for the violation.

### [Advantageous Effects]

According to embodiments of the present invention, when collection is requested from a resident, a worker of a collection company may visit each household to collect and dispose of garbage contained in a garbage bag on which an identification code is printed at a temporary garbage storage, and the collection company may retrieve a collection service charge included in a garbage bag price. Therefore, it is possible to efficiently collect and dispose of garbage.

Also, according to embodiments of the present invention, service quality related to garbage disposal is improved, and a residential environment becomes clean and sanitary. It is possible to prevent foul odors, and the convenience to residents is increased. It is possible to detect a resident who does not separately discard garbage and encourage him or her to separately discard garbage. Since it is possible to obtain accurate statistics of processing information about sales, circulation, collection, etc. of garbage bags, management can be automated.

### [Description of Drawings]

FIG. 1 is a diagram of a home-visiting garbage disposal system according to an embodiment of the present invention.
FIG. 2 is a diagram schematically showing the system of FIG. 1.
FIG. 3 is a block diagram exemplifying a detailed structure of a garbage disposal service apparatus of FIG. 1.
FIG. 4 is a sequence diagram illustrating a home-visiting garbage disposal process according to an embodiment of the present invention.
FIG. 5 is a flowchart showing an operating process of the garbage disposal service apparatus of FIG. 1.

### [Modes of the Invention]

Hereinafter, exemplary embodiments of the present invention will be described in detail with reference to the accompanying drawings.

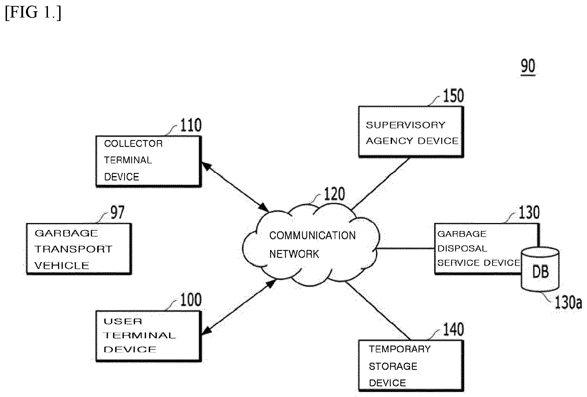

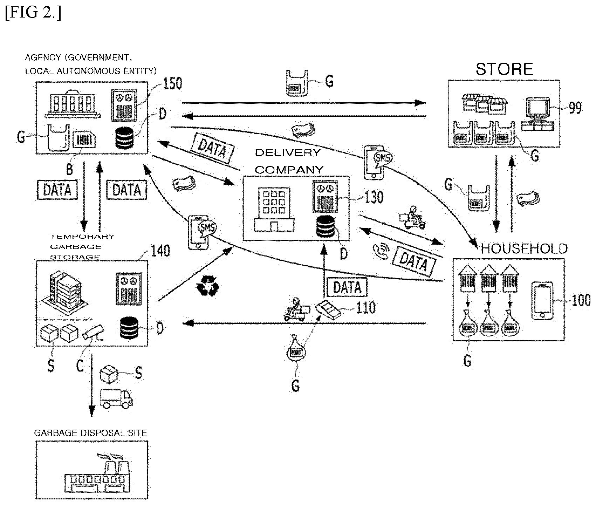

FIG. 1 is a diagram of a home-visiting garbage disposal system according to an embodiment of the present invention, and FIG. 2 is a diagram schematically showing the system of FIG. 1.

As shown in FIG. 1, a home-visiting garbage disposal system 90 according to the embodiment of the present invention includes all or some of a user terminal device 100, a collector terminal device 110, a communication network 120, a garbage disposal service device 130, a temporary storage device 140, and a supervisory agency device 150 and may further include a store device for selling garbage bags and the like.

The term "includes all or some of' means that the temporary storage device 140 or the supervisory agency device 150 may be omitted in the home-visiting garbage disposal system 90, all or some of the components, such as the garbage disposal service device 130, may be integrated into a network device (e.g., a wireless exchange device) constituting the communication network 120, and the like. To aid in understanding the present invention, it is assumed that all of the components are included.

According to an embodiment of the present invention, the garbage disposal service device 130, the temporary storage device 140, the supervisory agency device 150, etc. may also be described as servers. The store device may be referred to as a store terminal, the collector terminal device 110 may be referred to as a collector terminal or the like, and the user terminal device 100 may be referred to as a resident terminal or the like. Since various other components may also be referred to by various other names, the present invention is not limited to such names.

The user terminal device 100 includes a device which is capable of wired or wireless communication, such as a personal computer (PC) (e.g., a desktop PC, a laptop PC, or a tablet PC) or a smart phone, and that a user of each household, that is, a resident, has and may further include a wearable device such as Gal* gear of the Korean company S. A resident, that is, a user, who purchases a garbage bag from a store puts garbage in the garbage bag. When the garbage bag is filled with garbage, the resident seals the garbage bag and may access the garbage disposal service device 130 in a wired or wireless manner through the user terminal device 100 to request collection of garbage contained in the garbage bag. The collection request can be made through a service screen displayed on the screen or through voice recording or the like. In the case of voice, a collection request can be recognized by analyzing the content of the user's response to a question because a natural language processing technology has been greatly developed. Here, garbage bags G may be classified into a general garbage type, a food garbage type, a recyclable waste type, a hazmat garbage type, etc. and are provided as standard bags having predesignated capacities. Not only recycling bags but also hazmat bags are distributed to residents for free by the government. Since quick response (QR) codes are printed on the bags, it is possible to immediately know from which household garbage is generated. After distributing the bags for free, the government records the home address and the number of bags, and thus residents cannot waste the bags thoughtlessly.

When making such a collection request, a resident may input or report visit information using the user terminal device 100, and the visit information may include all or some pieces of information on the type of garbage to be collected, the name of the resident, the home address of the resident, the phone number of the resident, a requested collection time, and the like. The visit information may also be named collection information or visit request information according to the embodiment of the present invention.

The collector terminal device 110 may include various devices of a worker who visits a corresponding household according to a garbage collection request of a user, that is, a resident. For example, the collector terminal device 110 may include a scanner for recognizing a barcode, a QR code, or the like printed on a garbage bag, and such a code image may include a smart phone or a dedicated terminal that the worker, who is a collector, of a garbage collection company has. For example, the worker of the collection company may execute an application (hereinafter, app) in his or her smart phone for code recognition and transmit the recognition result to the garbage disposal service device 130 or the like. In this process, time information related to a collection time may be transmitted together.

The collection worker recognizes an identification code printed on a garbage bag using, for example, an identification code reader as the collector terminal device 110, inputs collection information, and transmits the collection information including the identification code to the garbage disposal service device 130, such as a collection company server, so that the government or the local autonomous entity may be notified of the collection information. The collection information includes all or some of the name of the resident, the home address of the resident, the phone number of the resident, a collection company name, a collection worker name, and a collection time. For such information, the worker may use his or her smart phone, but the identification code reader may include a display unit so that such information may be input.

The communication network 120 includes both wired and wireless communication networks. For example, as the communication network 120, wired and wireless Internet networks may be used or interoperate with each other. Here, the wired network includes an Internet network, such as a cable network or a public switched telephone network (PSTN), and the wireless communication network includes a code division multiple access (CDMA) network, a wideband CDMA (WCDMA) network, a global system for mobile communication (GSM) network, an evolved packet core (EPC) network, a long term evolution (LTE) network, a wireless broadband (WiBro) network, or the like. The communication network 120 according to the embodiment of the present invention is not limited thereto, and a cloud computing network in a cloud computing environment, a fifth generation (5G) network, etc. may be used by way of example. When the communication network 120 is a wired communication network, an access point in the communication network 120 may access a telephone exchange office or the like. On the other hand, when the communication network 120 is a wireless communication network, an access point in the communication network 120 may access a serving general packet radio service (GPRS) support node (SGSN) or a gateway GPRS support node (GGSN) managed by a communication service company to process data or may access various repeaters, such as a base station transmission (BTS), a NodeB, and an e-NodeB, to process data.

The communication network 120 may include an access point. The access point includes a small base station, such as a femto or pico base station, which is installed in many buildings. Femto and pico base stations are distinguished by how many user terminal devices 100 or collector terminal devices 110 can access the base stations according to classifications of small base stations. The access point may include a short-range communication module for performing short-range communication, such as ZigBee and Wi-Fi, with the user terminal device 100, the collector terminal device 110, or the like. The access point may use the transmission control protocol/Internet protocol (TCP/IP) or real-time streaming protocol (RTSP) for wireless communication. Here, short-range communication may be performed according to various standards not only including Wi-Fi but also including radio frequency (RF) and ultra-wideband (UWB) communication, such as Bluetooth, ZigBee, infrared light, ultra-high frequency (UHF), and very high frequency (VHF), and the like. Accordingly, the access point may extract the location of a data packet, designate an optimal communication path for the extracted location, and transfer the data packet to a next device, for example, the garbage disposal service device 130, along the designated communication path. In a general network environment, the access point may share several circuits which include, for example, a router, a repeater, a relay, and the like.

The garbage disposal service device 130 may include a company server of a collection company which collects garbage. The garbage disposal service device 130 may be installed and managed in the collection company which sends, when garbage collection is requested from the user terminal device 100, a worker thereof to each household to collect and move a garbage bag G containing garbage to a temporary garbage storage. Like delivering noodles with black soybean sauce, pizza, fried chicken, etc. to consumers, the collection company provides a service of visiting each household to collect a garbage bag G containing garbage of the household to the temporary garbage storage. The government or the local autonomous entity may approve a plurality of collection companies so that the collection companies may compete with each other in good faith. Each household may prefer to receive the service from only one company determined by the government. However, the embodiment of the present invention is not limited to any one method. The garbage disposal service device 130 may be a running company which professionally provides only an online service and may interoperate with a company device (e.g., a PC, a smart phone, or a server) of a collection company for collecting garbage. For example, the garbage disposal service device 130 according to the embodiment of the present invention interoperates with the collection company devices of multiple collection companies, the garbage disposal service device 130 may select collection companies corresponding to the district (or zone) of the resident who makes the garbage collection request, ask whether it is possible to collect garbage, and designate a specific collection company according to the response results so that garbage may be collected. Accordingly, the embodiment of the present invention is not limited to any one form.

When a request for collection of a garbage bag containing garbage is received from the user terminal device 100, the garbage disposal service device 130 transmits visit information to a collection worker or gives a visit order to the collection worker, and the collection worker visits a household corresponding to the visit information using a collection motorcycle or a garbage transport vehicle 97, collects a garbage bag G which is sealed by a resident with garbage contained therein, and moves the garbage bag G to a temporary garbage storage. The garbage transport vehicle 97 may have a similar size to a delivery vehicle. The temporary garbage storage may be considered a place for checking whether garbage is properly discarded from each household and separating garbage before transporting garbage to an incineration plant, a landfill, or the like. In this process, the garbage disposal service device 130 may acquire an image captured by a worker or a video captured with a camera as discard state information (or data) of garbage. When the collection worker visits the household, a garbage bag containing garbage may be collected in an airtight container, and the garbage bag may be transported frozen to the temporary garbage storage because a refrigerating machine is installed in the vehicle of the collection worker. Since the transport time is not very long, electricity bills are not high.

When collection information is received, the garbage disposal service device 130 may store the collection information in a database (DB) 130a, calculate a collection service charge, and provide the calculated collection service charge to the supervisory agency device 150 together with the collection information. For example, the garbage disposal service device 130 may find the amount of garbage disposed of by each company on the basis of the identification information (e.g., device information of a scanner and affiliation information of a collection company worker) of a collection company which is provided when the barcode of the garbage bag is recognized and may calculate a charge on the basis of the amount of garbage. In this process, the type of garbage may be determined to calculate the charge. Since the charge may be calculated according to an agreement between the company and the government, the embodiment of the present invention is not limited to any one form.

Above all, the garbage disposal service device 130 according to the embodiment of the present invention may analyze a garbage discard state on the basis of artificial intelligence (AI). For example, when a captured video related to garbage sorting is provided from the temporary storage device 140, the garbage disposal service device 130 may analyze the video and automatically recognize a code image in this process. For example, a plurality of workers may sort different garbage bags in the captured video. Accordingly, worker-specific garbage bags may be recognized in the received video, and garbage discard states may be analyzed through the recognition. Also, when general garbage bags are produced in two types, that is, burnable general garbage bags and unburnable general garbage bags, labor costs may be considerably reduced. This is because each household sorts garbage into burnable garbage and unburnable garbage in advance.

A camera, such as a closed-circuit television (CCTV), may be installed above a conveyor and capture a video of garbage bags moving on the conveyor. In addition to the CCTV, an infrared sensor and the like for distinguishing general garbage, recyclable garbage, food garbage, and hazmat garbage from each other may be installed in a temporary storage. Accordingly, the garbage disposal service device 130 may detect whether a different type of garbage is included in a specific garbage bag on the basis of a captured video provided from the temporary storage device 140 or sensing data of a sensor or a sensor camera. For example, when garbage passes through a conveyor, like a reader which detects a hazmat, the garbage disposal service device 130 may acquire a corresponding video to distinguish a bad garbage bag first through deep learning of the AI or the like. On the basis of the video, the garbage disposal service device 130 may sort garbage from only the specific garbage bag and acquire evidential data through photographing or the like to bring a user of the corresponding household to account.

The temporary storage device 140 includes various devices installed in a temporary garbage storage. The temporary storage device 140 may typically include a CCTV. A conveyor belt is used to fill a large box of the temporary storage, and the process is monitored through the CCTV. When the large box is filled with garbage, a signal may be transmitted to a heavy-duty truck (or a terminal of the driver) so that the garbage may be transported to an incineration plant or a landfill. The temporary storage device 140 is installed and managed in a temporary garbage storage which is built in every residential area and in which garbage bags collected from households are temporarily stored. A garbage bag which is requested to be collected by a resident is collected at a temporary garbage storage installed in a district to which the residence of the resident belongs, and a collection worker drives a collection vehicle to the basement of the temporary garbage storage and sequentially puts garbage in storage boxes S in order of high-to-lower floors. For example, since recyclable waste does not smell as much, recyclable waste, general garbage, and food garbage may be disposed of on the second, third, and fourth below-ground floors, respectively.

In this case, collection information including identification codes B of garbage bags collected by the collection worker is stored in a DB D of the temporary storage device 140 such as a garbage storage server. In other words, before the collection worker put the garbage bags in the storage boxes S, the identification codes B of the garbage bags are recognized by a reader provided in the temporary garbage storage or the storage boxes, or collection information including the identification codes B is transmitted through an identification code reader of the collection worker to the garbage storage server and stored therein.

The temporary garbage storage may be a building including a plurality of above-ground floors and below-ground floors. The above-ground floors may include an office for managing garbage and a community facility which can be jointly used by residents, thereby benefiting residents. In the below-ground floors, garbage bags containing garbage may be classified by types and put in storage boxes S for temporary storage. For example, recyclable waste, general garbage, and food garbage may be temporarily stored on the second, third, fourth below-ground floors, respectively. In the storage boxes S, garbage bags may be stored frozen by a refrigerating machine, and thus foul odors can be prevented. Since garbage bags are temporarily stored and then transported to a garbage disposal site such as an incineration plant, not much electricity is consumed for freezing. Also, in garbage stored in the temporary garbage storage, recyclable waste may be separately collected by a collection worker, and the profit may be retrieved by the collection company.

When unrecyclable garbage, such as general garbage or food garbage, is included in a recyclable garbage bag or hazmat garbage is included in a garbage bag, the garbage storage server, more particularly, the temporary storage device 140, may transmit collection information including an identification code printed on the garbage bag to the supervisory agency device 150. The supervisory agency device 150 may receive the collection information and bring a resident who violates the regulations to account by notifying the resident of a warning, a penalty, or the like through mail or the user terminal device 100. For example, a CCTV camera C is installed near the storage boxes S kept in the basement and monitors the storage boxes in real time, and video information of the CCTV camera C is stored in the garbage storage server in real time. As the temporary storage device 140, the garbage storage server analyzes the video information of the CCTV camera C and operates so that a storage box S filled with garbage bags may be sealed, transported to a garbage disposal site, such as an incineration plant or a landfill, through a transport vehicle, and finally disposed of.

The supervisory agency device 150 is installed in and managed by a public institution of the government or the local autonomous entity or installed in and managed by an outsourcing company of a public institution. The supervisory agency device 150 generates and manages identification codes B to be printed on garbage bags G, and the identification codes include barcodes, QR codes, and the like. When an order is received from a store at which garbage bags are being sold, the supervisory agency device 150 sells garbage bags G on which identification codes B are printed to the store, and sale information, such as a store name, the identification codes, a sale price, and a sales volume, is stored in the DB D. The sale price of the garbage bags includes a collection service charge for a collection worker of a collection company to move the garbage bags containing garbage to a temporary garbage storage. In other words, the collection service charge may be additionally added to the sale price of an existing garbage bag.

After collection is finished, the supervisory agency device 150 calculates the collection service charge and pays the collection service charge to the collection company through a collection company server. In other words, after checking collection information received from the collection company server, the supervisory agency device 150 calculates the amount of money and pays the collection service charge to the collection company server. Residents oppose entry of an unclean garbage service company into their neighborhood. Therefore, it may be democratic and reasonable for the government to announce that benefits will be provided, receive applications from several neighborhoods, and select a neighborhood which will benefit in a transparent voting manner.

To build such a system, first, the government or the local autonomous entity should legally approve establishment and running of a collection company which collects garbage bags containing garbage, and the collection company constructs a building for a temporary garbage storage in every residential area because the government lacks money. A temporary garbage storage is installed in every district, such as a Dong or Myeon, so that garbage of residents who reside in each administrative district may be collected at a temporary garbage storage installed in the administrative district to which the residences of the residents belong through the collection company.

In addition, a store device 99 includes a mobile terminal or a computer installed in a store which is designated to buy garbage bags G from the government or the local autonomous entity and sell the garbage bags G. The store device 99 transmits an order for garbage bags which will be sold to residents to the supervisory agency device 150 in a wired or wireless manner as necessary and pays a sale price which includes a collection service charge of a collection company, thereby purchasing the garbage bags G. In this case, the order of the store includes a type, capacity, number, etc. of garbage bags together.

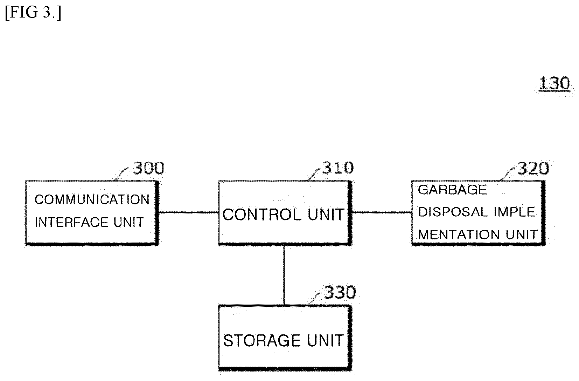

FIG. 3 is a block diagram exemplifying a detailed structure of a garbage disposal service apparatus of FIG. 1.

As shown in FIG. 3, the garbage disposal service device 130 according to the embodiment of the present invention includes all or some of a communication interface unit 300, a control unit 310, a garbage disposal implementation unit 320, and a storage unit 330.

The communication interface unit 300 communicates with each of the user terminal device 100, the collector terminal device 110, the temporary storage device 140, and the supervisory agency device 150 through the communication network 120 of FIG. 1. During the communication process, the communication interface unit 300 may perform modulation/demodulation operations, multiplexing/demultiplexing operations, encoding/decoding operations, a scaling operation for converting the resolution, and the like, which are self-evident to those of ordinary skill in the art and thus a detailed description thereof is omitted.

The communication interface unit 300 may provide, for example, an online service screen according to a service requested from the user terminal device 100. Also, the communication interface unit 300 may receive collection information, such as the name of a user who requests garbage collection, home address information of the user, and a garbage type, through a service screen and transfer the collection information to the control unit 310.

When garbage collection is requested from the user, the communication interface unit 300 may order garbage collection by providing all or some piece of the collection information to the collector terminal device 110 under the control of the control unit 310. Since a visit is made to collect garbage according to the embodiment of the present invention, a collector may visit each household to collect garbage at a corresponding time by referring to information, such as a requested visit time, provided by the user upon making the collection request. For example, like a pizza or fried chicken delivery service, it is preferable to immediately deliver garbage. Like a Ka∗o taxi, right after a resident makes a delivery request, it is preferable to be able to check the status of a coming delivery vehicle on a map. Since the collection may take a long time due to a heavy traffic condition, it is preferable to run the service in consideration of such a problem.

In addition, the communication interface unit 300 may receive code information, which is provided by a worker of a collection company who visits each household having a collection request and scans a code image, such as a barcode or a QR code, printed on a garbage bag through a scanner or his or her smart phone, and transfer the code information to the control unit 310. The code information may include information on the serial number, administrative district, etc. of the garbage bag. In addition to the code information, the communication interface unit 300 may further receive collection worker information, information on a time for collecting garbage (or first time information), and the like.

Further, the communication interface unit 300 may communicate with the temporary storage device 140 in which garbage is temporarily stored and sorted by a worker of the collection company, thereby providing a video captured by a camera, such as a CCTV, information on a time for sorting garbage (or second time information), or information about whether garbage disposal regulations are violated when garbage is sorted. With regard to such a violation of the garbage disposal regulations, when it is detected whether a garbage bag violates the garbage disposal regulations on the basis of code information of the garbage bag, a separate collection worker may photograph the garbage bag, or a video captured by a CCTV may be provided.

Moreover, under the control of the control unit 310, the communication interface unit 300 may provide data related to the current garbage discard state and the like of garbage bags disposed of from each household to the supervisory agency device 150 and provide analysis data obtained by classifying and analyzing the disposed garbage amounts of collection companies by date, time, garbage type, etc. to the supervisory agency device 150. The service charges of the collection companies may be calculated on the basis of the analysis data.

Besides, the communication interface unit 300 may receive an answer related to service satisfaction through a short message or the like transmitted to the user terminal device 100 of a user of each household from which garbage is collected and transfer the received answer to the control unit 310. It is preferable to carry out a survey to ask residents about service satisfaction under the leadership of the government.

The control unit 310 takes charge of overall control operations for the communication interface unit 300, the garbage disposal implementation unit 320, and the storage unit 330 of FIG. 3. Typically, when a garbage collection service is requested from the user terminal device 100, the control unit 310 controls the garbage disposal implementation unit 320 so that a service screen may be provided. Also, when collection information, for example, home address information, the name information of a user, and garbage type information, provided through the service screen, which is provided upon receiving the garbage collection request, is received from the communication interface unit 300, the control unit 310 may temporarily store the information in the storage unit 330 and then load and provide the information to the garbage disposal implementation unit 320.

In addition, the control unit 310 may perform various operations in conjunction with the garbage disposal implementation unit 320, analyze whether the garbage disposal regulations are violated on the basis of the code information of a garbage bag collected from each household, and control the communication interface unit 300 to provide the analysis data to the supervisory agency device 150 of FIG. 1. For example, to determine whether the garbage disposal regulations are violated, an image captured by a separate collection worker and provided through the temporary storage device 140 may be received. However, when a captured video is received, it may be analyzed whether the garbage disposal regulations are violated by analyzing the captured video. For example, when a collected garbage bag is put on a sorting table, a code image may be automatically recognized through an image of the captured video. Then, it is determined on the basis of the code image whether the garbage disposal regulations are violated in the captured video of the time when the garbage bag is sorted. Details thereof will be further described below.

Moreover, the control unit 310 may perform an operation for surveying service satisfaction of a user of each household from which garbage is collected and the like to evaluate collection companies. For example, the control unit 310 may request a service satisfaction survey from the supervisory agency device 150 or may transmit a message to the user terminal device 100 at a time point at which garbage collection is finished or in the corresponding evening, provide the result of a response to the message to the garbage disposal implementation unit 320, receive the analysis results, and provide the analysis results to the supervisory agency device 150.

The garbage disposal implementation unit 320 may perform an operation of generating a service screen for providing the service according to the embodiment of the present invention. To this end, the garbage disposal implementation unit 320 may include a graphical user interface (GUI) processor. The garbage disposal implementation unit 320 may classify data related to whether the garbage disposal regulations are violated on the basis of the user information of a user of each household from which garbage is collected or the code information of a garbage bag and store the classified data in the storage unit 330 or the DB 130a of FIG. 1. When it is necessary to analyze a captured video, the garbage disposal implementation unit 320 may perform an operation of analyzing the captured video. For example, after the code information of a specific garbage bag is recognized, a captured video related to garbage sorting may be provided in connection with the garbage bag. In this case, when recyclable waste is detected in the general garbage bag of the captured video, the garbage disposal implementation unit 320 may capture corresponding images of the captured video in the form of a unit frame video or may automatically capture only the corresponding portion of a unit frame video and then keep the captured portion as evidential data regarding whether the garbage disposal regulations are violated. The evidential data may be provided to the user terminal device 100 of each household by which the garbage disposal regulations are violated.

The garbage disposal implementation unit 320 may determine cases of violating the garbage disposal regulations in various forms. In the above case, various images of general garbage, recyclable waste, and the like may be acquired in advance so that a determination may be made on the basis of the acquired images, or a deep learning object classifier and the like of the AI may be used for learning in the process so that an accurate determination may be made. As soon as the AI detects a violation state, the violation state is recorded in a computer (or a memory), and the corresponding household is warned. When the number of warning records becomes high, the household is fined. For example, there may be various types of general garbage. Accordingly, images related to recyclable waste may be stored in the form of templates, and it may be determined whether recyclable waste is found in general garbage on the basis of the images. For example, when recyclable waste is detected in a video captured by infrared imaging or the like a conveyor, the garbage disposal implementation unit 320 may determine whether the detected recyclable waste is recyclable waste through a template-based object detector or classifier and request a worker who is in charge of garbage sorting to check the detected recyclable waste. Since the worker in charge may be requested in various ways to check the detected recyclable waste, the embodiment of the present invention is not limited to any one method. For example, first, it may be possible to simply check sorted garbage bags on the conveyor. In the embodiment of the present invention, a captured video may not be analyzed, and a worker who sorts garbage may capture an image of a violation case with a camera, the camera of a smart phone, or the like and provide the captured image. Since this operation may be changed without limitations according to a system designer's intention, the embodiment of the present invention is not limited to any one form.

For example, in a site for sorting garbage, a worker in charge may execute an app for providing the service according to the embodiment of the present invention through his or her smart phone or the like and then recognize the code image of a garbage bag. In this case, it is possible to immediately know who is a user of the garbage bag by searching data stored in the DB 130a. This information may be acquired with code information or the like which is scanned by a scanner or the like when a worker visits a household to collect garbage. Consequently, after such a recognition operation, the camera is operated to capture an image of a corresponding portion in a garbage sorting site of a temporary storage, and a worker selects which regulation is violated or inputs the information in person and then transmits the picture image. Then, the picture image is received by the communication interface unit 300 and transferred to the garbage disposal implementation unit 320. The garbage disposal implementation unit 320 may match the picture image on the basis of the code information of the garbage bag, systemically classify the picture image, and store the classified picture image in the DB 130a.

In addition, the garbage disposal implementation unit 320 may generate analysis data to be provided to the supervisory agency device 150. In other words, the garbage disposal implementation unit 320 may analyze garbage disposal events of a user of each household, analyze data according to districts of a Dong or Gu, times, date, etc., and provide the analysis data to the supervisory agency device 150. In this process, the current garbage discard states of garbage collection companies may be analyzed using time information and the like, and service quality of the collection companies may also be monitored by checking service satisfaction and the like.

Besides, the garbage disposal implementation unit 320 may designate one collection company for garbage collection in each administrative zone. However, when a plurality of collection companies do business in the same jurisdiction, garbage collection may be performed on the basis of business registration information. For example, a food garbage company and a recyclable waste collection company may be present separately. The supervisory agency may select a garbage company which collects all types of garbage, but there may not be such a company. Accordingly, after determining a type of garbage which can be collected by such a company, the garbage disposal implementation unit 320 may search garbage collection companies on the basis of garbage collection information of a user and designate a plurality of collection companies in the same jurisdiction to request collection. When one household simultaneously requests collection of general garbage and recyclable waste, the garbage disposal implementation unit 320 receives requests for collecting different types of garbage through the same service screen but may designate different collection companies on the basis of the requests and order that garbage be collected from the corresponding household. Since the user may separately request collection of the different types of garbage, the embodiment of the present invention is not limited to any one form. The system according to the embodiment of the present invention may provide the service so that each household may get a service of one garbage delivery service company determined by the government.

The storage unit 330 temporarily stores various types of information or data processed under the control of the control unit 310 and then outputs the information or data. Here, it is substantially meaningless to distinguish between information and data. In the field, these terms are used interchangeably in practice, and thus the embodiment of the present invention is not limited to the use or concepts of the terms. However, in terms of a data packet structure, information and data included in a header (part) and a payload (part) may be distinguished from each other. For example, the storage unit 330 may receive and store a captured video obtained by capturing a garbage sorting scene under the control of the control unit 310, and the stored video may be output and provided to the garbage disposal implementation unit 320 under the control of the control unit 310.

In addition to the above description, the communication interface unit 300, the control unit 310, the garbage disposal implementation unit 320, and the storage unit 330 of FIG. 3 may perform various operations. Other details have been sufficiently described above and are not repeated.

Meanwhile, as another embodiment of the present invention, the control unit 310 of FIG. 3 may include a central processing unit (CPU) and a memory, and the CPU and the memory may be integrated into a single chip. The control unit 310 may include a control circuit, an arithmetic logic unit (ALU), a command interpretation unit, a registry, etc., and the memory may include a random access memory (RAM). The control circuit may perform a control operation, the ALU may process a calculation of binary bit information, and the command interpretation unit may interpret which operation is related to input binary bit information. The interpretation may denote that data on the left and right sides of a lookup table (LUT) are matched to each other and then the control circuit finds right-side data on the basis of the left-side data and performs an operation. The registry is involved in data storage in a software manner. According to the above configuration, when the garbage disposal service device 130 is initially operated, the CPU may copy and load a program of the garbage disposal implementation unit 320 onto the memory and then execute the program, thereby rapidly increasing a data processing rate.

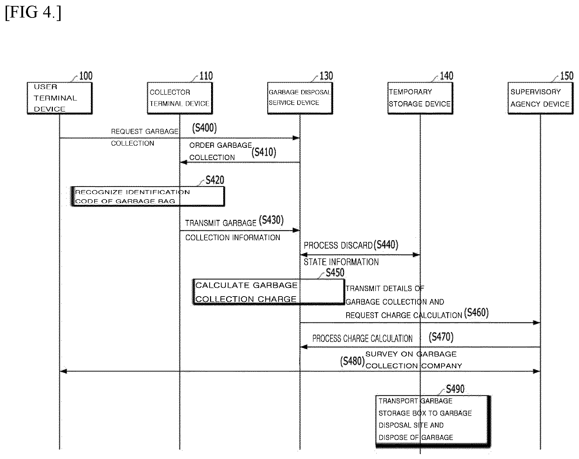

FIG. 4 is a sequence diagram illustrating a home-visiting garbage disposal process according to an embodiment of the present invention.

As shown in FIG. 4, the user terminal device 100 accesses a service provided by the garbage disposal service device 130 and requests garbage collection (S400). In this process, collection information, such as address information, garbage type information, and available collection time information, required for garbage collection may be provided. Also, user information of a user, such as the user name, may be provided.

When the garbage collection is requested from the user terminal device 100, the garbage disposal service device 130 may provide the collection information to the collector terminal device 110 of a collection company and give an order to collect garbage (S410). When ordering garbage collection, the garbage disposal service device 130 may give the order immediately before the collection time requested by the user (e.g., 30 minutes before collection). On the other hand, when the collection information is received or, for example, 30 minutes before collection, the garbage disposal service device 130 may immediately provide the collection information to the collector terminal device 110 to ask whether the worker can collect the garbage. For example, a plurality of companies may be designated in the administrative zone. When a response is received from a worker of a company who can collect the garbage at the time requested by the user, the garbage collection company and worker may be determined on the basis of the response. Also, the garbage disposal service device 130 may give a notification immediately before collection. According to the embodiment of the present invention, since a worker visits each household at a time requested by a user to collect garbage in a face-to-face manner, collection requests and collection may be performed in various forms. For example, a user makes a collection request at his or her workplace but may think that he or she will arrive home late. Then, he or she may access the garbage disposal service device 130 and change collection time information so that the changed collection time information may be transferred to a collection company or worker.

The worker who visits a household for garbage collection causes the identification code of a garbage bag to be recognized through the collector terminal device 110 (S420). In the process of recognizing the code, the name of the collection worker may be recorded. However, when the collection is requested, the worker is designated already, and thus collection information, such as collection time information, may be transmitted to the garbage disposal service device 130 as soon as the code is recognized (S430).

Also, the garbage disposal service device 130 may process collection information received from the temporary storage device 140 regarding garbage sorting and the like, more specifically, garbage discard state information (S440). For example, when garbage is moved to a temporary storage of a collection company, the garbage may be sorted at the place. For example, when recyclable waste, such as a battery, is contained in general garbage, information or data (e.g., a photograph) related to the recyclable waste may be provided to the garbage disposal service device 130 as discard state information. When a different type of garbage is found through an infrared camera or the like installed above a conveyor rather than by hand, it may be efficient to sort the different type of garbage and finally check the sorted garbage bag. Since this has been sufficiently described above, the contents are not repeated.

Further, the garbage disposal service device 130 may calculate the collection charge of the garbage collection company (S450). For example, information about which company disposes of what amount of garbage may be checked through code information printed on garbage bags. Accordingly, company-specific, monthly, or weekly collection charges may be calculated by calculating service prices on the basis of corresponding code information according to general garbage, recyclable garbage, food garbage, and the like.

Moreover, the garbage disposal service device 130 requests the supervisory agency device 150 to calculate a service charge and processes the service charge (S460 and S470).

Besides, the garbage disposal service device 130 or the supervisory agency device 150 may carry out a survey about service satisfaction with the garbage collection company through the user terminal device 100 of each household from which garbage is collected (S480). The supervisory agency may request the company to improve service quality on the basis of the service satisfaction or refer to the service satisfaction when selecting a company.

Also, the temporary storage device 140, more specifically, the collection company in which garbage sorting is finished may order transportation of a garbage storage box to a garbage disposal site such as a landfill or an incineration plant (S490). In this process, the temporary storage device 140 may give the order to a driver of a transport vehicle and store and manage information related to garbage disposal. Also, the temporary storage device 140 may provide the relevant information to the garbage disposal service device 130. In the basement of the service company, a worker who exclusively sorts garbage sorts general garbage into incineration plant garbage (e.g., burnable garbage) and landfill garbage (e.g., unburnable garbage).

In connection with FIG. 4, a detailed scenario is described below.

It is assumed that a housewife purchases a garbage bag including a delivery charge from a supermarket.

A QR code or the like is printed on the surface of the bag. For example, a 30-liter general garbage bag is currently priced at 700 won, and it is assumed that the 30-liter general garbage bag is sold at 1000 won including a delivery service charge. For reference, recycling bags are free, and when a user puts general garbage in a recycling bag, the related agency or the like may bring the user to account. Also, hazmat bags are additionally produced for syringes of hospitals, batteries, etc. and specially managed.

After sorting garbage first, the housewife fills the 30-liter general garbage bag with only general garbage and then ties the top of the garbage bag. The housewife accesses the service of a garbage service company through a phone call, a text message, or an app and requests the service in a service screen. For example, in a specific neighborhood of Seoul, people cannot dispose of garbage that they tie up on a Friday morning either on the Friday or the Saturday. They should wait until late evening on the Sunday and dispose of the garbage at a dump yard in front of their buildings, which is considerably inconvenient. At the dump yard, recyclable waste, general garbage, and food garbage are discarded.

According to the embodiment of the present invention, as soon as an order is received from a household, a collection worker of a service company visits the household using a motorcycle or a vehicle and collects garbage.

As soon as the collection worker receives the garbage, he or she scans, for example, a QR code on the surface of the garbage bag with a reader or a scanner in front of the house and then transmits the information to the government or the company through a communication network such as a satellite (global positioning system (GPS)) communication network. In this case, the information may include a garbage bag number, the name of the collection worker, the time when the garbage is collected, and the address of the house from which the garbage is collected.

The collection worker brings the garbage to the company which is a collection business. At this time, a refrigerating machine is in the garbage transport vehicle so that foul odors can be considerably reduced. Since the garbage is rapidly disposed of, not much electricity is used for the garbage between the house and a landfill.

There is a temporary garbage storage in the basement of the collection company. For example, the company may be a high-rise building, and a company office and a recreation facility for residents may be present on above-ground floors.

The government approves some garbage service companies for each Dong office. Accordingly, a place from which a large amount of garbage is disposed of requires a greater number of service companies.

Upon arrival at the company, the collection worker transmits information indicating the time when the garbage bag arrives at the company to the government and the company. For example, the temporary storage device 140 provided in the temporary storage recognizes the code image so that the information may be automatically transmitted.

Recyclable waste, general garbage, and food garbage may be disposed of on the second, third, and fourth below-ground floors, respectively.

Since workers who exclusively sort garbage sort garbage once again in the temporary garbage storage of the company basement, sorting becomes accurate. This involves the manual work of workers. A household which carelessly sorts its garbage may be brought to account later by the related agency. In this process, evidential data, such as a photograph acquired by a worker through imaging or the like, may be collected and provided to the related agency.

Information on the garbage bag which is completely taken apart is finally transmitted to the government and the company. In the information, sorting results are recorded. The sorting results may be the aforementioned discard state information.

As soon as a large garbage box in the company basement is filled with garbage, a heavy-duty truck transports the large garbage box to a landfill or an incineration plant. At this time, information on the weight of garbage loaded on the truck, the landfill or incineration plant in which the garbage is discarded, and etc. is transmitted to the government and the company. Accordingly, the government can know the amount of garbage of each Dong office generated for one week, and a landfill or an incineration plant may be accurately designed with the statistics. Also, the number of garbage bags to be supplied by the government is accurately calculated by a computer system.

Various advantages can be achieved by the new garbage disposal method. Since the overall garbage disposal process is computerized, charges can be simply and accurately calculated between the government and the company. It is possible to use the garbage collection service at a low cost for small profits and quick returns, and garbage is not seen by other people. Accordingly, residents will gladly welcome the new garbage disposal method. Also, infectious diseases, such as coronavirus disease (COVID)-19, may be significantly reduced due to the new garbage disposal method. This is because infection routes are reduced.

As a result, garbage bag numbers are stored in computers of the government and the company, and the numbers include requested collection times, times at which collection workers bring the garbage bags to the company, times at which the garbage bags are taken apart, and even a problem which may occur when the garbage bags are taken apart.

Immediately after garbage is collected, the government may survey the corresponding household about service satisfaction by transmitting a text message to the household, thereby monitoring service satisfaction. The corresponding garbage is recorded on the surfaces of general garbage bags, recyclable waste bags, food garbage bags, and hazmat garbage bags to prevent mistakes of residents. For example, eggshell, pork bone, etc. are recorded on the surfaces of general garbage bags.

Further, a local referendum may be held by each Dong office or each Gu office so that residents may select whether to use the garbage collection service.

Another scenario is described according to the embodiment of the present invention.

First, residents of each Gu vote for or against the garbage collection service. The 30-liter general garbage bag is 700 won in a Gu in which residents vote against the garbage collection service and is 1000 won in a Gu in which residents vote for the garbage collection service. In other words, the delivery charge is 300 won. For example, the delivery charge of Kyochon chicken is 2000 won, but the garbage delivery charge is lowered for small profits and quick returns and thus is expected to be 300 won or less. This is because everyone generates garbage.

The government (e.g., Korea's Ministry of Environment) installs a call center so that residents may ask about a garbage sorting method. For foreigners, a description is given in their languages. The phone number of the governmental call center is written on the surfaces of garbage bags, and thus, when residents cannot determine which one of general garbage, recyclable waste, and food garbage their garbage is, they may ask about it. For example, eggshells and pork bones are not food garbage but are general garbage.

In the temporary storage of a basement of a garbage delivery service company, several large boxes are prepared to collect recyclable waste according to their types. There are a large box for only collecting glass products, a large box for only collecting plastic products, a large box for only collecting metallic products, a large box for only collecting thick papers, a large box for only collecting paper boxes, and the like. As soon as a large box is filled with recyclable waste, a heavy-duty truck transports the recyclable waste to a recycling plant. Since workers who exclusively sort garbage sort garbage one more time, sorting becomes accurate so that almost 100% of recyclable garbage can be recycled. Hundreds of garbage delivery service companies help the government, and the entire disposal process is computerized. Accordingly, garbage problems are rapidly and accurately solved.

Finally, each household may get the service of only one company determined by the government, and when results of a survey on residents about the service become negative, the government imposes a penalty on the company. Currently, garbage service companies pick on residents and get annoyed. There are no boxes for iron scraps and glassware, and in many cases, there are a lot of boxes for only collecting plastic waste. In some cases, residents are told to discard iron scraps and glassware to a neighboring building, but a person in charge of the neighboring building may tell the residents not to bring their garbage to his or her building. Since one company has a limit in disposing of garbage, the government should approve a larger number of companies for a Dong from which a large amount of garbage is generated than a Dong from which a small amount of garbage is generated. For example, in Seoul, three and five companies may be approved for Bongcheon-dong and Sillim-dong, respectively.

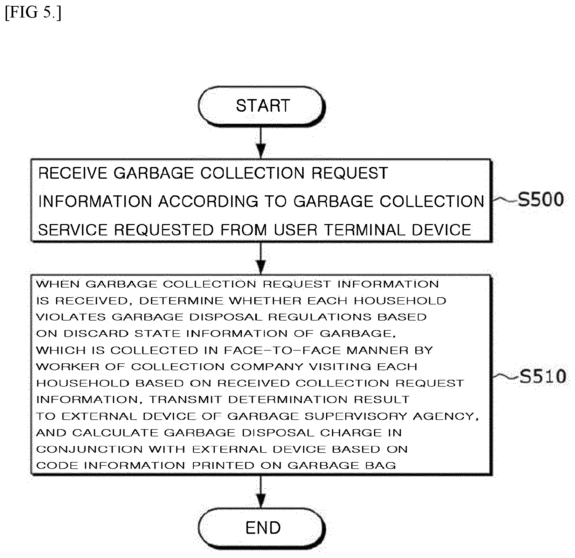

FIG. 5 is a flowchart showing an operating process of the garbage disposal service apparatus of FIG. 1.

For convenience of description, referring to FIG. 5 together with FIG. 1, the garbage disposal service device 130 according to the embodiment of the present invention receives garbage collection information according to a garbage collection service requested from the user terminal device 100 (S500). The garbage collection information may not only include the type of garbage to be discarded by each household, for example, information indicating that the garbage is general garbage, recyclable waste, or food garbage, but also include a requested collection time, address information, and the like. The requested collection time is a heavy burden for a company and thus may be omitted from the service.

When the garbage collection information is received, the garbage disposal service device 130 determines whether each household violates garbage disposal regulations on the basis of the discard state information of garbage, which is collected in a face-to-face manner by visiting each household on the basis of the received collection information, transmits the determination result to the external device of a garbage supervisory agency, and calculates a garbage disposal charge in conjunction with the external device on the basis of code information printed on a garbage bag (S510). The external device may include the supervisory agency device 150, such as a computer or a server, used by a worker of the supervisory agency.

In addition to the above described details, the garbage disposal service device 130 according to the embodiment of the present invention may perform various operations. Other details have been sufficiently described above and are not repeated.

Meanwhile, according to the embodiment of the present invention, when the amount of garbage generated from each Dong, for example Sillim-dong and Bongcheon-dong, for one week is calculated, the amount of generated garbage becomes important data for the government to design an incineration plant and a landfill. The amount of generated garbage may be analyzed by the garbage disposal service device 130 so that data may be provided to the government. Also, the number of garbage service companies to be supplied to each Dong is accurately calculated.

When a large box is filled with general garbage through a conveyor, garbage dust sticks to a CCTV lens so that the large box cannot be monitored. Accordingly, a water jet may be installed in front of the CCTV lens. Then, when the large garbage box is monitored in a monitor room, a person in the monitor room may periodically clean the lens by pressing a switch and then monitor the large box. The water jet raises its pressure by suctioning up water instead of air and then jets the water backward. A hole for suctioning water may be disposed below the CCTV. For example, the garbage disposal service device 130 according to the embodiment of the present invention may communicate with the water jet. When a captured video is received from an imaging apparatus, such as a camera, of the CCTV or the like, the captured video may be abnormal, for example, images may be analyzed to be unclear. In this case, the water jet may be operated to clean the lens of the imaging apparatus. In this process, the degree of cleanliness may be determined, and when the degree of cleanliness satisfies a reference value, the operation of the water jet may be stopped.

Although it is described above that all elements constituting the embodiment of the present invention are combined or operated in combination, the present invention is not necessarily limited to the embodiment. In other words, one or more of the elements may be selectively combined for operation within the object of the present invention. Also, although each of all the elements may be implemented as one separate piece of hardware, some or all of the elements can be selectively combined with one another to be implemented as a computer program having a program module which performs some or all functions combined from one or more pieces of hardware. Codes and code segments constituting the computer program can be easily inferred by those of ordinary skill in the art. The computer program is stored in a non-transitory computer-readable medium and read and executed by a computer so that the embodiment of the present invention can be implemented.

The non-transitory computer-readable recording medium refers to a medium which can store data semi-permanently rather than storing data for a short time such as a register, a cache, and a memory and can be read by a device. Specifically, the above-described programs can be stored in the non-transitory computer-readable recording medium, such as a compact disc (CD), a digital versatile disk (DVD), a hard disk, a Blu-ray disk, a Universal Serial Bus (USB), a memory card, and a readonly memory (ROM), and provided therein.

Although the preferred embodiments of the present invention have been illustrated and described above, the present invention is not limited to the above-described specific embodiments. Various modifications thereof can be made by those of ordinary skill in the art without departing from the gist of the present invention claimed in the claims. These modifications should not be understood separately from the technical spirit or view of the present invention.

## Claims

1. A garbage disposal service apparatus comprising:
a communication interface unit configured to receive garbage collection request information according to a garbage collection service requested from a user terminal device; and
a control unit configured to determine, when the garbage collection request information is received, whether each household violates garbage disposal regulations on the basis of discard state information of garbage, which is collected in a face-to-face manner by a worker of a collection company visiting each household on the basis of the received collection request information, transmit a determination result to an external device of a garbage supervisory agency, and calculate a garbage disposal charge in conjunction with the external device on the basis of code information printed on a garbage bag and the discard state information.

2. The garbage disposal service apparatus of claim 1, wherein the control unit analyzes zone-specific, date-specific, or time-specific current garbage discard states on the basis of the code information of the garbage bag and the discard state information and transmits analysis results to the external device.

3. The garbage disposal service apparatus of claim 1, wherein, when a plurality of collection companies are present in the same jurisdiction, the control unit designates at least one collection company on the basis of collection information and response results of the collection companies and orders the designated collection company to collect the garbage.

4. The garbage disposal service apparatus of claim 3, wherein the control unit determines a type of the garbage on the basis of the collection information, designates a plurality of collection companies corresponding to a determination result, and orders the plurality of collection companies to collect the garbage.

5. The garbage disposal service apparatus of claim 1, wherein the control unit monitors the garbage collection company on the basis of first time information corresponding to a time when the garbage collection is requested, second time information corresponding to a time when the garbage is collected from each household, third time information corresponding to a time when the garbage is sorted in a temporary storage, and fourth time information corresponding to a time when the sorted garbage is transported to a landfill or an incineration plant.

6. The garbage disposal service apparatus of claim 1, wherein the communication interface unit interoperates with a water jet provided for an imaging apparatus of a temporary storage in which the garbage is temporarily stored, and
when a captured video of the imaging apparatus is abnormal, the control unit operates the water jet provided for the imaging apparatus to clean a lens of the imaging apparatus.

7. The garbage disposal service apparatus of claim 1, wherein the communication interface unit interoperates with an infrared sensor installed in a temporary storage in which the garbage is temporarily stored to detect hazmat garbage on a conveyor belt, and
the control unit analyzes a sensing signal of the infrared sensor on the basis of deep learning of an artificial intelligence to distinguish the hazmat garbage.

8. A method of operating a garbage disposal service apparatus, the method comprising:
receiving, by a communication interface unit, garbage collection request information according to a garbage collection service requested from a user terminal device; and
when the garbage collection request information is received, determining, by a control unit, whether each household violates garbage disposal regulations on the basis of discard state information of garbage, which is collected in a face-to-face manner by a worker of a collection company visiting each household on the basis of the received collection request information, transmitting a determination result to an external device of a garbage supervisory agency, and calculating a garbage disposal charge in conjunction with the external device on the basis of code information printed on a garbage bag and the discard state information.

9. The method of claim 8, further comprising analyzing, by the control unit, zone-specific, date-specific, or time-specific current garbage discard states on the basis of the code information of the garbage bag and the discard state information and transmitting analysis results to the external device.

10. The method of claim 8, further comprising, when a plurality of collection companies are present in the same jurisdiction, designating, by the control unit, at least one collection company on the basis of collection information and response results of the collection companies and ordering the designated collection company to collect the garbage.

11. The method of claim 10, wherein the ordering of the designated collection company to collect the garbage comprises determining a type of the garbage on the basis of the collection information, designating a plurality of collection companies corresponding to a determination result, and ordering the plurality of collection companies to collect the garbage.

12. The method of claim 8, further comprising monitoring, by the control unit, the garbage collection company on the basis of first time information corresponding to a time when the garbage collection is requested, second time information corresponding to a time when the garbage is collected from each household, third time information corresponding to a time when the garbage is sorted in a temporary storage, and fourth time information corresponding to a time when the sorted garbage is transported to a landfill or an incineration plant.

13. The method of claim 8, wherein the communication interface unit interoperates with a water jet provided for an imaging apparatus of a temporary storage in which the garbage is temporarily stored, and
the method further comprises, when a captured video of the imaging apparatus is abnormal, operating, by the control unit, the water jet provided for the imaging apparatus to clean a lens of the imaging apparatus.

14. The method of claim 8, wherein the communication interface unit interoperates with an infrared sensor installed in a temporary storage in which the garbage is temporarily stored to detect hazmat garbage on a conveyor belt, and
the method further comprises analyzing, by the control unit, a sensing signal of the infrared sensor on the basis of deep learning of an artificial intelligence to distinguish the hazmat garbage.
